# EUROPÄISCHE PATENTANMELDUNG

(11) **EP 1 793 211 A2**
(43) Veröffentlichungstag der Anmeldung: **06.06.2007**
(21) Anmeldenummer: 06022794.9
(22) Anmeldetag: 02.11.2006
(51) Int. Cl.: G01G 19/04

(54) **Verfahren und Vorrichtung zur Erfassung von auf eine Schiene einwirkenden Kräften**

(30) Priorität: 30.11.2005 DE 102005057473
(71) Anmelder: Schenck Process GmbH, 64293 Darmstadt (DE)
(72) Erfinder: Rettig, Manfred, 64367 Mühltal (DE); Groll, Peter, 64297 Darmstadt (DE)
(74) Vertreter: Blumbach - Zinngrebe

(57) **Zusammenfassung**

Die Erfindung betrifft ein Verfahren mit welchem eine vertikale Komponente und eine im wesentlichen horizontale Komponente einer auf eine Schiene für gleisgeführte Fahrzeuge einwirkenden Kraft erfasst und elektronisch ausgewertet wird. Um die gleichzeitige Erfassung von Q-Kräften und Y-Kräften sowie deren zugehörigen Momente weiter zu verbessern, ist vorgesehen, dass in einem definierten Abstand unterhalb eines Schienenfußes sich horizontal oder vertikal erstreckende Sensorebenen (32, 34 : 66, 68) vorgesehen werden, in denen Kraftaufnehmer (1, ... 16) zur gleichzeitigen Kraft- und Momentenerfassung angeordnet werden.

## Beschreibung

Die Erfindung betrifft ein Verfahren, mit welchem eine vertikale Komponente und eine im Wesentlichen horizontale Komponente einer auf eine Schiene für schienengeführte Fahrzeuge einwirkende Kraft erfaßt und elektronisch ausgewertet wird. Femer betrifft die Erfindung eine Kraftmeßvorrichtung zur Durchführung des Verfahrens.

In der deutschen Patentanmeldung 10 2005 036 608 wird ein Verfahren zur Erfassung der Krafteinwirkung auf eine Schiene durch ein schienengebundenes Rad sowie eine für solches Verfahren geeignete Vorrichtung beschrieben. Dabei wird die auf die Schiene senkrecht einwirkende Last (Q-Kraft) durch in Wägebalken angeordnete Kraftaufnehmer in Form von Dehnungsmeßstreifen erfasst. Ferner wird eine etwa horizontal die Schiene belastende Querkraft (Y-Kraft) durch weitere Kraftaufnehmer erfasst, welche im Kopf der Schiene untergebracht sind. Die Ausgangssignale der Kraftaufnehmer werden jeweils einer elektronischen Auswerteschaltung zugeführt.

Die deutsche Patentschrift 39 37 318 offenbart eine Kraftmeßvorrichtung für senkrecht auf einen Meßkörper einwirkende Lasten. Der Meßkörper weist zwei konzentrisch ineinander angeordnete Verformungsringe sowie Krafteinleitungselemente auf und ist zwischen einem Kraftübertragungselement und einer Platte angeordnet. Störende Querkräfte werden direkt zur Platte abgeleitet, so dass die Verformungsringe von solchen Störungen weitgehend unbeeinflußt bleiben.

Der Erfindung liegt die Aufgabe zugrunde, die gleichzeitige Erfassung von Q-Kräften und Y-Kräften sowie deren zugehörigen Momente weiter zu verbessern.

Die Erfindung sieht dazu ein Kraft- und Momentenmeßverfahren zum Ermitteln der vertikalen Q-Kraftkomponente sowie der Y-Kraftkomponente gleisgeführter Räder vor, wobei in einem definierten Abstand unterhalb des Schienenfußes sich horizontal oder vertikal erstreckende Sensorebenen vorgesehen werden, in denen Kraftaufnehmer, etwa in der Form von Dehnungsmeßstreifen, zur gleichzeitigen Kraft- und Momentenmessung angeordnet werden. Die Erfindung hat den Vorteil, dass die Schiene nicht mehr der Kraftmessung angepasst werden muss sondern nur als Kraftübertragungsorgan wirken kann. Femer hat die Erfindung den Vorteil, dass für die Durchführung des Verfahrens kein besonderer apparativer Aufwand erforderlich ist.

Zweckmäßig wird eine erste Gruppe von Kraftaufnehmern zur Krafterfassung und eine zweite Gruppe von Kraftaufnehmern zur Momentenerfassung vorgesehen. Vorteilhaft ist femer, wenn aus der ersten Gruppe eine erste Brückenschaltung und aus der zweiten Gruppe wenigstens eine weitere Brückenschaltung gebildet wird, wobei die Ausgangssignale der Brückenschaltungen einer Auswerteeinrichtung zugeführt werden.

Eine zur Durchführung des Verfahrens dienende Kraftmeßvorrichtung sieht nach der Erfindung einen Meßkörper vor, bei welchem zwischen einem Krafteinleitungsteil und einem Kraftausleitungsteil biegeempfindliche Teile vorhanden sind, welche eine oder mehrere parallele und beabstandete Sensorebenen definieren. Nach Einbau des Meßkörpers unter einen Schienenfuß können sich die Sensorebenen entweder vertikal oder in einer anderen Ausführungsform horizontal erstrecken. In bevorzugter Gestaltung der Erfindung können die biegeempfindlichen Teile biegeweiche fluchtende Wände in einem quer zur Schiene einzubauenden Wägebalken sein, deren plane Flächen die Sensorebenen definieren. Altemativ können die biegeempfindlichen Teile aus einer Messplatte des Meßkörpers vorstehende kreisförmige und konzentrische Verformungsringe sein, die plane, freie und die Sensorebenen definierende Stimflächen besitzen. Dabei kann vorgesehen sein, dass einige der freien Stimflächenin einer ersten Sensorebene und die anderen Stimflächen in einer zweiten Sensorebene liegen. Andererseits ist auch aus Kostengründen zu bevorzugen, dass alle Stirnflächen in einer einzigen Sensorebene sich befinden.

Die der Erfindung zugrunde liegende Aufgabe wird besonders vorteilhaft gelöst, wenn auf den Stimflächen eine erste Gruppe von Dehnungsmeßstreifen sowie eine zweite Gruppe von Dehnungsmeßstreifen appliziert sind, wobei die Dehnungsmeßstreifen der ersten Gruppe Teil einer ersten Brückenschaltung zur Krafterfassung und die Dehnungsmeßstreifen der zweiten Gruppe Teil einer weiteren Brückenschaltung zur Momentenerfassung sind, deren Ausgangssignale der Auswerteeinrichtung zugeführt werden. Wenn die weitere Brückenschaltung aus einer zweiten und einer dritten Brückenschaltung besteht, können die auf einem gemeinsamen Durchmesser liegenden Dehnungsmeßstreifen der zweiten Gruppe die zweite Brückenschaltung und die auf einem weiteren gemeinsamen Durchmesser, der zum ersten Durchmesser senkrecht liegt, liegenden Dehnungsmeßstreifen der zweiten Gruppe die dritte Brückenschaltung bilden. Diese Gestaltung bringt den Vorteil, dass die Querkraft Y aus beliebiger Richtung heraus innerhalb der Horizontalebene auf die Schiene einwirken und erfasst werden kann.

Im Übrigen sind weitere vorteilhafte Ausführungsformen in den Unteransprüchen angegeben. Die Erfindung wird nachstehend anhand der beigefügten Zeichnung im Einzelnen beschrieben. Es zeigen:
**Figur 1:** eine schematische Darstellung der Prinzipien des erfindungsgemäßen Verfahrens
**Figur 2:**schematisch einen Meßkörper in Einbaulage, und zwar in der Mitte in Draufsicht und beiderseits der Mitte im Horizontalschnitt für das Verfahren nach Figur 1;
**Figur 3:** einen Vertikalschnitt durch eine unter eine Schiene eingebauten Kraft- und Momentenmeßvorrichtung gemäß einer anderen Ausführungsform;
**Figur 4:** einen Vertikalschnitt durch eine Hälfte eines rotationssymmetrischen Meßkörpers für die Vorrichtung nach Figur 3;
**Figur 5:** eine Ansicht von unten eines wesentlichen Teils des Meßkörpers nach Figuren 3 und 4;
**Figuren 6 bis 8** Schaltungsdiagramme für am Meßkörper nach Figur 5 zu applizierenden Kraftaufnehmer, und
**Figur 9** eine schematische Erläuterung einer Auswerteeinrichtung für die Erfindung.

Während des Überfahrens eines Schienenstückes 20 durch einen Eisenbahnwaggon oder einen anderen schienengeführten Wagen übt das nicht dargestellte Rad auf den Schienenkopf 22 eine dem Waggongewicht entsprechende vertikale Kraft Q aus. Femer treten auch im wesentlichen horizontale Querkräfte auf, die als Kraft Y auf den Schienenkopf einwirken.

Zur Erfassung der Kräfte Q und Y dienen Meßkörper verschiedener Art, in die die Kräfte Q und Y eingeleitet werden und die biegeempfindliche Teile aufweisen, an denen Kraftmesser wie etwa Dehnungsmeßstreifen appliziert werden. Die durch elektrisches Zusammenschalten der Kraftmesser erhaltenen Ausgangssignale werden elektronisch in einer Auswerteeinrichtung derart verarbeitet, dass an einer Anzeige Größe und Schwankung der erfaßten Kräfte sowie des Momentes sichtbar werden, mit welchem die Querkraft Y die Schiene belastet.

Ein derartiger Meßkörper 26 ist unterhalb des Schienenfußes 24 angeordnet, nimmt die auf die Schiene einwirkenden Kräfte über Krafteinleitungsteile auf und führt sie über die biegeempfindlichen Teile und Kraftausleitungsteile in die Schwelle oder direkt in das gegebenenfalls verfestigte Gleisbett ab, das zum Beispiel eine feste Fahrbahn sein kann. Erfindungsgemäß sind in dem Meßkörper 26 die biegempfindlichen Teile so angeordnet, dass sie zwei parallele, beabstandete und im Wesentlichen vertikale Sensorebenen 32, 34 definieren, in denen die Kraftaufnehmer sich befinden. In diesem Beispiel nicht dargestellt ist die elektronische Schaltung für die Kraftaufnehmer, die eine gleichzeitige Erfassung nicht nur der Kräfte Q und Y sondern auch der Y Kraftmomente erlaubt. Die für die Momentenerfassung dienenden Kraftaufnehmer sind dazu in einem vorgegebenen Abstand unterhalb der Einwirkungslinie der Kraft Y auf die Schiene angeordnet.

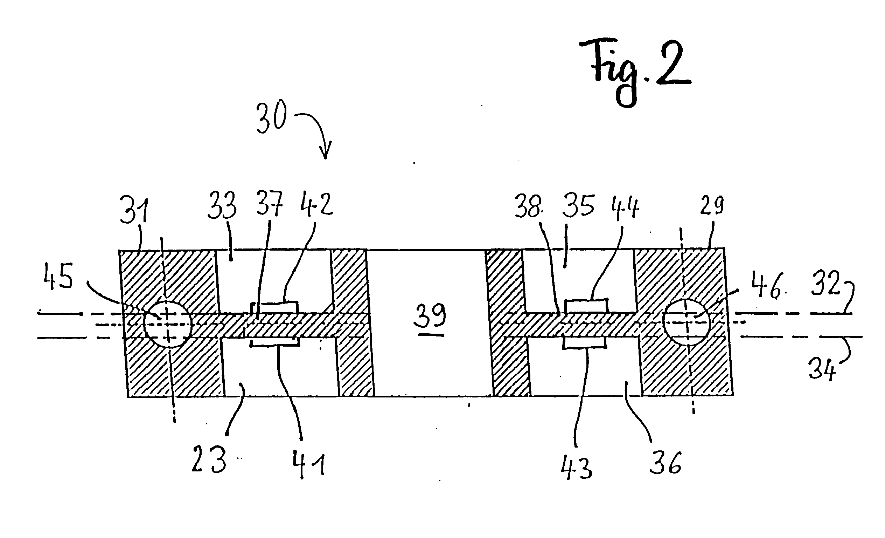

Als Beispiel für den Meßkörper 26 zeigt Figur 2 einen Wägebalken 30 von länglich rechteckiger Form, der mittig einen Krafteinleitungsabschnitt 39 und an den beiden gegenüberliegenden Enden je einen Kraftausleitungsabschnitt 29, 31 aufweist Jeder Kraftausleitungsabschnitt 29, 31 besitzt je eine Vertikalbohrung 45, 46 für eine Verschraubung des Wägebalkens 30 mit einer Schwelle oder dergleichen Fundament. Zwischen der Vertikalbohrung 45 und dem Krafteinleitungsabschnitt 39 sind etwa mittig zwei horizontale und fluchtende Blindbohrungen 23, 33 in den Korpus des Wägebalkens 30 eingebracht, welche vor einer biegeempfindlichen, ebenen Wand 37 enden. Die Wand 37 hat dazu eine wesentlich geringere Stärke als der Wägebalken 30, befindet sich in der Neutrallinie desselben und stellt somit ein biegeempfindliches Teil dar.

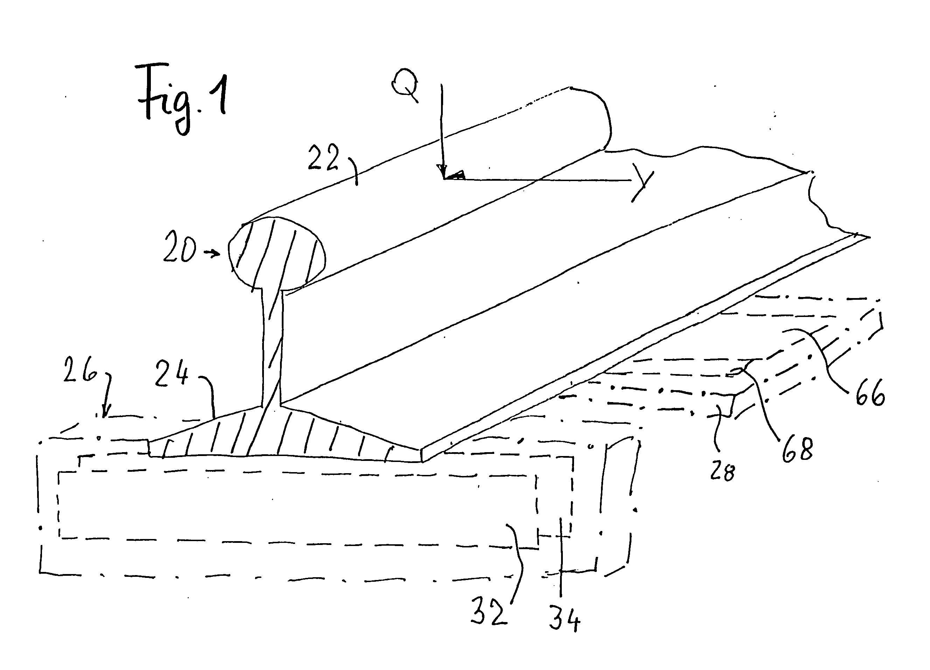

Etwa mittig zwischen der Bohrung 46 und dem Krafteinleitungsabschnitt 39 sind ebenfalls zwei horizontale, fluchtende Blindbohrungen 35, 36 in den Korpus des Wägebalkens 30 eingebracht, deren lichte Weiten und Tiefen den Blindbohrungen 23, 33 gleichen. Die Böden der Blindbohrunegn 35, 36 lassen vom Korpus demzufolge eine ebene, biegeempfindliche Wand 38 stehen, die der Wand 37 gleicht und mit ihr fluchtet. Die Ausgestaltung der vier Blindbohrungen ist so getroffen, dass die Vorderseiten der Wände 37, 38 die erste Sensorebene 32 und die Rückseiten der Wände 37, 38 die zweite Sensorebene 34 definieren. Die beiden Sensorebenen 32, 34 erstrecken sich parallel zueinander im Abstand der Stärke der Wände 37 38. Wie bei 41, 42, 43, 44 angedeutet sind in den Sensorebenen innerhalb der Blindbohrungen schematisch angedeutete Dehnungsmeßstreifen appliziert, die zu Wheatstone-Brücken zusammengeschaltet und mit einer elektronischen Auswerteeinrichtung verbunden sind. Durch elektrisches Verbinden der einzelnen Dehnungsmeßstreifen mit geeigneten Schaltungspunkten der Wheatstone-Brücken - etwa entsprechend Figuren 6 bis 8, die für ein nachstehend noch zu beschreibendes Ausführungsbeispiel der Erfindung gelten, - gelingt die gleichzeitige Erfassung der Q Kraft, und des Y Kraftmomentes. Im in Figur 2 dargestellten Ausführungsbeispiel werden die Q-Kraft beispielsweise durch die Dehnungsmeßstreifen 41 und 44 und das Querkraftmoment beispielsweise durch die Dehnungsmeßstreifen 42 und 43 erfaßt. Nach Einbau des Wägebalkens 30 unter den Schienenfuß 24 und quer zu diesem können sich bei entsprechender Gestaltung des Krafteinleitungsabschnittes 39 die Sensorebenen 32, 34 vertikal erstrecken (Figur 1).

Der Wägebalken kann auch nur mit einer einzigen Sensorebene 32 oder 34 versehen sein, wenn beispielsweise alle zur Kraft- und Momentenmessung notwendigen Kraftaufnehmer (Dehnungsmeßstreifen) in jeweils gleicher oder halber Anzahl auf die Vorderseiten oder Rückseiten der beiden Wände 37 und 38 appliziert werden.

Gemäß einer anderen Ausführungsform der Erfindung ruht der Schienenfuß 24 auf einem Meßkörper 28, dessen biegeempfindliche Teile so gestattet sind, dass sie zwei parallele, beabstandete und im wesentlichen horizontale Sensorebenen 66, 68 definieren, in denen die Kraftaufnehmer zur gleichzeitigen Kraft- und Momentenerfassung angeordnet sind.

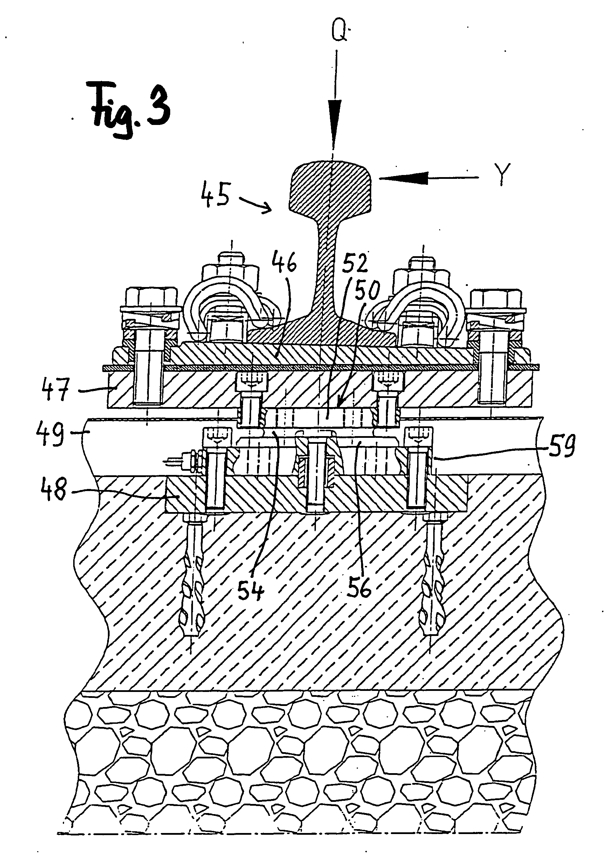

Ein Beispiel für diese andere Ausführungsform stellt der Meßkörper 50 gemäß Figuren 3 bis 5 dar. Wie aus Figur 3 ersichtlich ist ein Schienenstück 45 auf eine den Vorschriften der jeweiligen Bahngesellschft entsprechend gestalteten Rippenplatte 46 aufgeklemmt, welche mit einer Kopfplatte 47 elektrisch isoliert verbolzt oder verschraubt ist. Mit der Unterseite der Kopfplatte 47 ist der Meßkörper 50 durch Schrauben fest verbunden, welcher auf eine massive Grundplatte 48 aufgeschraubt ist. Die Grundplatte 48 ist im Gleisbett oder in einer Schwelle verankert. Ein abgekantetes Blech 49 überdeckt die empfindlichen Teile des Meßkörpers 50 zu dessen Schutz vor Beschädigungen, Verschmutzung oder Vereisung.

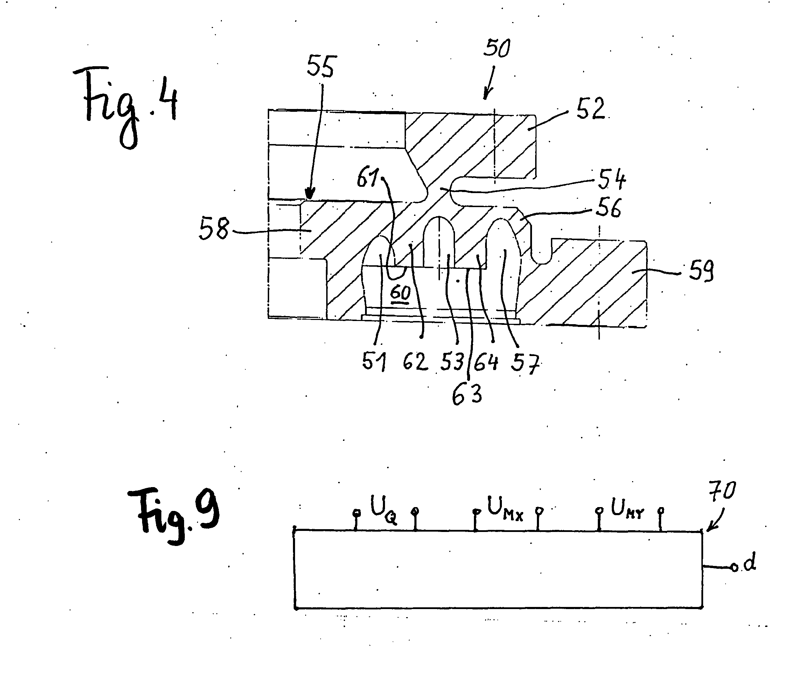

Der rotationssymmetrische, einteilige Meßkörper 50 weist eine runde Kraftübertragungsplatte 52 auf, die mit der Kopfplatte 47 fest verschraubt ist. An die Unterseite der Kraftübertragungsplatte 52 ist radial einwärts versetzt ein vergleichsweise dünner Ringsteg 54 (Figur 4) angeformt, der den Meßteil 55 des Meßkörpers 50 nach oben abschließt. Der Meßteil 55 besitzt einen Außenring 56, dessen Außenradius etwa demjenigen der Kraftübertragungsplatte 52 entspricht. Der Außenring 56 mündet nach unten in einen runden, massiven Kraftausleitungskranz 59, der mit der Grundplatte 48 verschraubt ist. Der Meßraum 60 wird von unten von einer hier nicht gezeigten Membran abgedichtet.

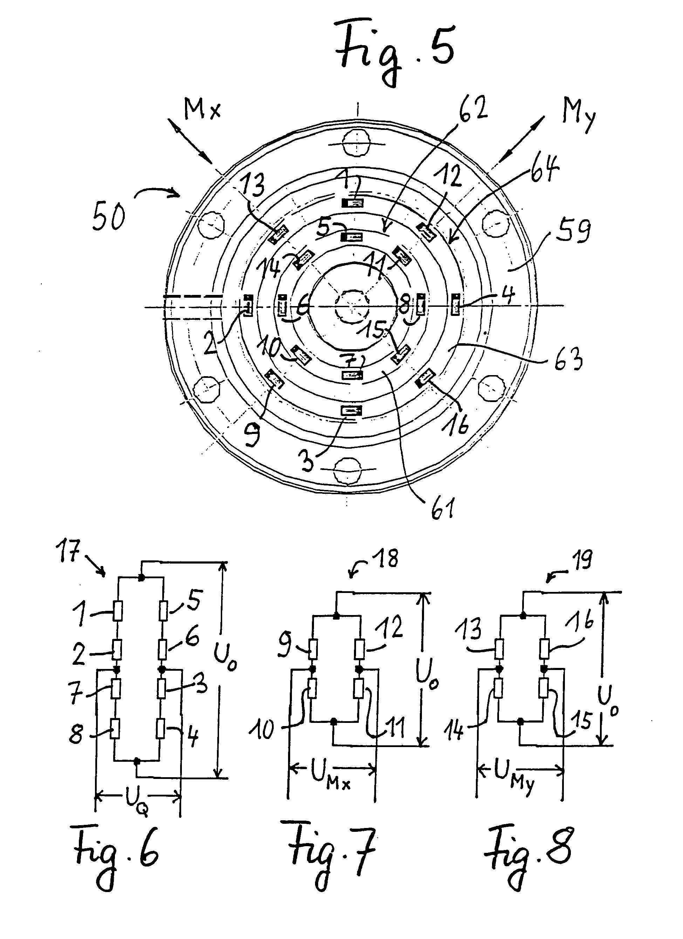

Der Meßteil besitzt femer eine vom Außenring 56 umschlossene Messplatte 58, in welche von unten drei konzentrische Einstiche 51, 53, 57 mit zur Mitte der Messplatte 58 abnehmender Tiefe getrieben sind. Aus der Messplatte ragen daher zwischen den Einstichen 51 und 53 ein innerer Verformungsring 62 und zwischen den Einstichen 53 und 57 ein äußerer Verformungsring 64 nach unten vor, wobei die beiden Verformungsringe praktisch gleiche Stärke haben und die freien, planen Stirnflächen 61, 63 der beiden Verformungsringe 62, 64 in einer Ebene liegen. Diese Ebene ist die oben erwähnte Sensorebene 66, die nach Einbau des Meßkörpers 50 gemäß Figur 3 sich horizontal erstreckt. Auf den beiden kreisringförmigen Stimflächen 61, 63 sind Dehnungsmeßstreifen appliziert, wie Figur 5 zeigt. Unter dem Einfluß der Kräfte Q und Y neigt sich der innere Verformungsring 62 nach innen und der äußere Verformungsring 64 neigt sich nachradial außen.

Gemäß Figur 5 ist auf der Stimfläche 63 und auf der Stimfläche 61 eine erste Gruppe von acht Dehnungsmeßstreifen 1, 2, 3, 4, 5,,6, 7, 8 appliziert, von denen die ersten vier 1 ... 4 kreuzweise einander gegenüberliegend auf der äußeren Stirnfläche 63 und die restlichen vier in gleicher Weise kreuzweise einander gegenüberliegend auf der inneren Stimfläche 61 angeordnet sind. Entsprechend Figur 6 sind die Dehnungsmeßstreifen 1 bis 8 in der Weise zu einer Brücke 17 zusammengeschaltet, dass zwischen den Streifen 1 und 5 sowie 4 und 8 eine Versorgungsspannung Uₒ angelegt ist. Das Ausgangssignal U_{Q} aus dieser Brücke wird zwischen Streifen 2 und 7 sowie zwischen Streifen 6 und 3 abgegriffen.

Auf die Stirnflächen 61 und 63 ist femer eine zweite Gruppe von Dehnungsmeßstreifen 9, 10, 11, 12, 13, 14, 15, 16 appliziert, von denen jeder Streifen in Umfangsrichtung mittig zwischen zwei benachbarten Streifen der ersten Gruppe angeordnet ist. Femer liegt jedes Paar 9, 10; 11, 12; 13, 14; 15, 16 von Streifen, von dem einer auf der äußeren Stimfläche 63 und der andere Streifen auf gleichem Radius auf der inneren Stimfläche 61 sitzt, bezüglich des gemeinsamen Mittelpunktes der Verformungsringe 62, 64 einem anderen Paar von Streifen genau gegenüber. Je vier Streifen zweier gegenüberliegender Paare sind zu je einer Brücke 18, 19 gemäß Figuren 7 und 8 zusammengeschaltet. Man sieht, dass die auf einem gemeinsamen Durchmesser, der beispielsweise in Richtung My weist, liegenden Streifen 9, 10, 11, 12 die Brückenschaltung 18 bilden, während die auf dem gemeinsamen Durchmesser Mx liegenden Dehnungsmeßstreifen 13, 14, 15, 16 die Brückenschaltung 19 bilden.

Bei den an die Versorgungsspannung Uₒ gelegten Brücken 18 und 19 wird das Ausgangssignal U_{Mx} aus Brücke 18 an den elektrischen Verknüpfungspunkten der in Umfangsrichtung gleich liegenden Streifen 9 und 10 bzw. 12 und 11 abgenommen. Entsprechend wird das Ausgangssignal U_{My} aus Brücke 19 an den elektrischen Verknüpfungspunkten der in Umfangsrichtung gleich liegenden Streifen 13, 14 eines Streifenpaares bzw. 15, 16 des gegenüberliegenden Streifenpaares abgenommen.

Die drei Ausgangssignale U_{Q}, U_{Mx} und U_{My} aus den Brücken 17, 18 und 19 werden einer nicht dargestellten elektronischen Auswerteeinrichtung 70 (Figur 9) zugeführt. Das Ausgangssignal U_{Q} aus der Brücke 17 ermöglicht die Erfassung der Normalbelastung durch die Kraft Q. Das Ausgangssignal U_{Mx} aus der Brücke 18 gestattet die Erfassung des durch die Kraft Y bewirkten Momentes in einer Richtung Mx und das Ausgangssignal U_{My} aus der Brücke 19 erlaubt die Erfassung des Momentes in einer zur Richtung Mx senkrechten Richtung My in der durch die Stirnflächen 61, 63 definierten Sensorebene 66. Dazu werden die Ausgangssignale U_{Mx} und U_{My} aus den Brücken 18 und 19 mit dem vorgegebenen Abstand d der Sensorebene 38 von der Schiene 20 in der Auswerteeinrichtung 70 kombiniert, indem beispielsweise der Parameter d über den zugehörigen Anschluß in die Auswerteeinrichtung eingegeben wird.

Das Ausführungsbeispiel der Erfindung gemäß Figuren 4 und 5 kann derart verändert werden, dass die beiden Verformungsringe 62, 64 in unterschiedlicher Höhe aus der Messplatte 58 nach unten vorstehen. Die Stirnfläche 63 des Verformungsringes 64 definiert dann die erste Sensorebene 66 und die Stimfläche 61 des inneren Verformungsringes 62 definiert eine zweite Sensorebene 68, welche sich zur Sensorebene 66 parallel in einem Abstand erstreckt, der durch die Höhendifferenz der Verformungsringe 62, 64 gegeben ist. Die Dehnungsmeßstreifen 1 bis 16 können auch in diesem Fall wie vorstehend beschrieben angeordnet und verschaltet werden, wobei lediglich in der Auswerteeinrichtung 70 die Höhendifferenz durch einen Korrekturfaktor berücksichtigt werden muss.

## Patentansprüche

1. Verfahren mit welchem eine vertikale Komponente und eine im wesentlichen horizontale Komponente einer auf eine Schiene für gleisgeführte Fahrzeuge einwirkenden Kraft erfasst und elektronisch ausgewertet wird, **dadurch gekennzeichnet, dass** in einem definierten Abstand unterhalb eines Schienenfußes sich horizontal oder vertikal erstreckende Sensorebenen (32, 34: 66, 68) vorgesehen werden, in denen Kraftaufnehmer (1, ... 16) zur gleichzeitigen Kraft- und Momentenerfassung angeordnet werden.

2. Verfahren nach Anspruch 1, **dadurch gekennzeichnet, dass** eine erste Gruppe von Kraftaufnehmern (1, ... 8) zur Krafterfassung und eine zweite Gruppe von Kraftaufnehmern (7, ...16) zur Momentenerfassung vorgesehen wird,

3. Verfahren nach Anspruch 2, **dadurch gekennzeichnet, dass** aus der ersten Gruppe eine erste Brückenschaltung (17) und aus der zweiten Gruppe wenigstens eine zweite Brückenschaltung (18, 19) gebildet wird., wobei die Ausgangssignale (U_{Q}, U_{Mx}, U_{My}) der beiden Brückenschaltungen einer Auswerteeinrichtung (70) zugeführt werden.

4. Vorrichtung zur Durchführung des Verfahrens nach einem der vorstehenden Ansprüche **gekennzeichnet durch** einen Meßkörper (26, 28, 30, 50), bei welchem zwischen einem Krafteinleitungsteil (39, 52) und einem Kraftausleitungsteil (29, 31; 59) biegeempfindliche Teile (37, 38; 62, 64) vorhanden sind, welche eine oder mehrere parallele und beabstandete Sensorebenen (32, 34; 66, 68) definieren.

5. Vorrichtung nach Anspruch 4, **dadurch gekennzeichnet, dass** die Sensorebenen (32, 34) nach Einbau des Meßkörpers (26, 30) unter einen Schienenfuß (24) vertikal ausgerichtet sind.

6. Vorrichtung nach Anspruch 4, **dadurch gekennzeichnet, dass** die Sensorebenen (66, 68) nach Einbau des Meßkörpers (28, 50) unter einen Schienenfuß (24) horizontal ausgerichtet sind.

7. Vorrichtung nach einem der Ansprüche 4 bis 6, **dadurch gekennzeichnet, dass** die biegeempfindlichen Teile biegeweiche fluchtende Wände (37, 38) in einem quer zur Schiene (20) einzubauenden Wägebalken (30) sind, deren plane Flächen die Sensorebenen (32, 34) definieren.

8. Vorrichtung nach einem der Ansprüche 4 bis 6, **dadurch gekennzeichnet, dass** die biegeempfindlichen Teile aus einer Messplatte (58) des Meßkörpers (50) vorstehende kreisförmige und konzentrische Verformungsringe (62, 64) sind, die plane freie die Sensorebenen (66,68) definierende Stimflächen (61, 63) aufweisen.

9. Vorrichtung nach Anspruch 8, **dadurch gekennzeichnet, dass** einige der freien Stimflächen (61, 63) der Verformungsringe (62, 64) in einer ersten Sensorebene (66) und die anderen Stirnflächen in einer zweiten Sensorebene I(68) liegen.

10. Vorrichtung nach einem der Ansprüche 4 bis 9, **dadurch gekennzeichnet, dass** zwei konzentrische Verformungsringe (62, 64) vorgesehen sind, deren Stimflächen (61, 63) in einer Sensorebene (66) liegen.

11. Vorrichtung nach Anspruch 10, **dadurch gekennzeichnet, dass** auf den Stimflächen eine erste Gruppe von Dehnungsmeßstreifen (1, ... 8) sowie eine zweite Gruppe von Dehnungsmeßstreifen (7, ... 16) appliziert sind, wobei die Dehnungsmeßstreifen der ersten Gruppe Teil einer ersten Brückenschaltung (17) zur Krafterfassung (Q) und die Dehnungsmeßstreifen der zweiten Gruppe Teil wenigstens einer weiteren Brückenschaltung (18, 19) zur Momentenerfassung sind und die Ausgangssignale (Uₒ, U_{Mx}, U_{My}) der Auswerteschaltung (70) zugeleitet werden.

12. Vorrichtung nach Anspruch 11, **dadurch gekennzeichnet, dass** die weitere Brückenschaltung eine zweite (18) und eine dritte Brückenschaltung (19) umfasst.

13. Vorrichtung nach Anspruch 11 oder 12, **dadurch gekennzeichnet, dass** die Dehnungsmeßstreifen der ersten Gruppe auf den Stimflächen kreuzweise gegenüberliegend angeordnet sind.

14. Vorrichtung nach Anspruch 13, **dadurch gekennzeichnet, dass** die eine Hälfte der Dehnungsmeßstreifen der ersten Gruppe auf dem äußeren Verformungsring (64) und die zweite Hälfte auf dem inneren Verformungsring (62) appliziert sind.

15. Vorrichtung nach einem der Ansprüche 11 bis 14, **dadurch gekennzeichnet, dass** die Paare von Dehnungsmeßstreifen (7, ... 16) der zweiten Gruppe kreuzweise auf die Verformungsringe (62, 64) aufgebracht sind.

16. Vorrichtung nach Anspruch 15, **dadurch gekennzeichnet, dass** die auf einem ersten gemeinsamen Durchmesser liegenden Dehnungsmeßstreifen (9, 10, 11, 12) der zweiten Gruppe die zweite Brückenschaltung (18) bilden und dass die auf einem zum ersten Durchmesser senkrechten zweiten Durchmesser liegenden Dehnungsmeßstreifen (13, 14, 15, 16) die dritte Brückenschaltung (19) bilden.
